(19)

Europäisches Patentamt

European Patent Office

Office européen des brevets

(11) **EP 4 181 114 A1**

(12) **EUROPEAN PATENT APPLICATION**

(43) Date of publication:
**17.05.2023 Bulletin 2023/20**

(21) Application number: **22190958.3**

(22) Date of filing: **18.08.2022**

(51) International Patent Classification (IPC):
**G09G 5/00** (2006.01)      **G06F 3/14** (2006.01)
**H04N 7/15** (2006.01)

(52) Cooperative Patent Classification (CPC):
**H04N 7/15; H04N 7/157;** G06F 3/1454; G09G 5/14;
G09G 5/38

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.11.2021   JP 2021186017**

(71) Applicant: **FUJITSU LIMITED**
**Kawasaki-shi, Kanagawa 211-8588 (JP)**

(72) Inventors:
• **Akiyama, Katsuhiko**
**Tokyo, 105-7123 (JP)**
• **Okabayashi, Keiju**
**Kawasaki-shi, Kanagawa, 211-8588 (JP)**
• **Chen, Bin**
**Kawasaki-shi, Kanagawa, 211-8588 (JP)**
• **Hatada, Koki**
**Kawasaki-shi, Kanagawa, 211-8588 (JP)**

(74) Representative: **Hoffmann Eitle**
**Patent- und Rechtsanwälte PartmbB**
**Arabellastraße 30**
**81925 München (DE)**

(54) **VIRTUAL WORKSPACE SHARED BY MULTIPLE TERMINALS**

(57)      A display control method implemented by a computer, the method including: receiving an operation that focuses on a point of interest of a virtual workspace shared among a plurality of terminals; calculating a display range of the virtual workspace on a basis of, of inputs made by the plurality of terminals, a latest input made before the operation is received; and updating a display window of the virtual workspace displayed on a terminal from which the operation is received on a basis of the display range.

FIG. 3

EP 4 181 114 A1

**Description**

FIELD

The embodiments discussed herein are related to a display control technique.

BACKGROUND

In remote conference systems, various types of information sharing are implemented among multiple terminals connected via a network.

For example, the multiple terminals share a virtualized working space (hereinafter referred to as "workspace"). In the workspace shared by the individual terminals in this manner, it is possible to arrange windows of still images, moving images, and the like in addition to documents and charts, or to attach labels on which handwritten characters may be input.

Since each terminal has freedom to the extent that it can display any position in the workspace in any size, there is an aspect that it is difficult to attract attention from users to a point of interest in a discussion among the users in the workspace.

In view of such an aspect, instruction tools such as pointers, markers, and the like that may be shared among the individual users may be used.

Japanese Laid-open Patent Publication No. 2019-16360 is disclosed as related art.

SUMMARY

TECHNICAL PROBLEM

However, since the instruction tool described above may not exert its effect when the instruction tool operated in the workspace is outside a range displayed on a terminal, there is still an aspect that it is difficult to implement display control for focusing on the point of interest in the workspace.

In one aspect, the embodiments aim to provide a display control method and a display control program that enable focusing on a point of interest in a workspace.

SOLUTION TO PROBLEM

According to an aspect of the embodiments, there is a display control method implemented by a computer, the method including: receiving an operation that focuses on a point of interest of a virtual workspace shared among a plurality of terminals; calculating a display range of the virtual workspace on a basis of, of inputs made by the plurality of terminals, a latest input made before the operation is received; and updating a display window of the virtual workspace displayed on a terminal from which the operation is received on a basis of the display range.

ADVANTAGEOUS EFFECTS OF INVENTION

According to one embodiment, it becomes possible to focus on the point of interest in the workspace.

BRIEF DESCRIPTION OF DRAWINGS

FIG. 1 is a diagram illustrating an exemplary configuration of a remote conference system;
FIG. 2 is a diagram illustrating an exemplary participant screen;
FIG. 3 is a schematic diagram illustrating an exemplary transition of a workspace;
FIG. 4 is a block diagram illustrating an exemplary functional configuration of a participant terminal;
FIG. 5 is a diagram illustrating an exemplary method of defining screen display information;
FIG. 6 is a diagram illustrating an exemplary method of calculating a ratio;
FIG. 7 is a diagram illustrating an exemplary method of calculating a ratio;
FIG. 8 is a flowchart illustrating a processing procedure when an operation event occurs;
FIG. 9 is a flowchart illustrating a processing procedure when a reception event occurs;
FIG. 10 is a flowchart illustrating a processing procedure when the operation event occurs;
FIG. 11 is a flowchart illustrating a processing procedure when the reception event occurs;

FIG. 12 is a flowchart illustrating a processing procedure when the operation event occurs; and

FIG. 13 is a diagram illustrating an exemplary hardware configuration.

DESCRIPTION OF EMBODIMENTS

Hereinafter, embodiments of a display control method and a display control program according to the present application will be described with reference to the accompanying drawings. Each of the embodiments merely describes an example or aspect, and such exemplification does not limit numerical values, a range of functions, usage scenes, and the like. Additionally, each of the embodiments may be suitably combined within a range that does not cause contradiction between processing contents.

[First Embodiment]

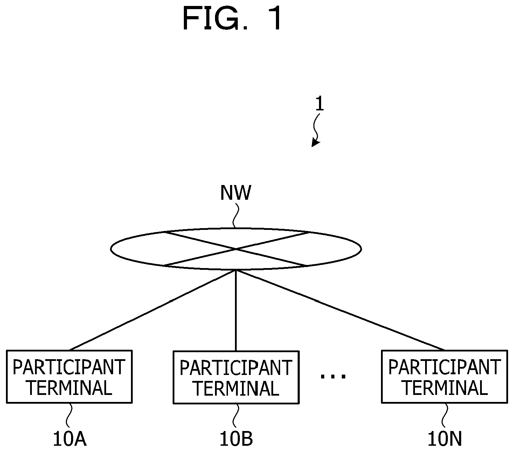

FIG. 1 is a diagram illustrating an exemplary configuration of a remote conference system 1. The remote conference system 1 illustrated in FIG. 1 provides an information sharing function between multiple participant terminals 10A to 10N connected via a network NW.

As illustrated in FIG. 1, the remote conference system 1 may include the participant terminals 10A to 10N. Hereinafter, when the participant terminals 10A to 10N do not need to be distinguished, the participant terminals 10A to 10N may be referred to as a "participant terminal 10".

Those participant terminals 10A to 10N are connected via the optional network NW. The network NW may be any type of communication network such as the Internet or a local area network (LAN) regardless of whether the network NW is wired or wireless.

The participant terminal 10 corresponds to an exemplary terminal device that provides the information sharing function described above. The participant terminal 10 may be used by participants of various types of conferences such as a workshop, study session, world cafe, and the like. A device type and a hardware configuration of the participant terminal 10 are not limited to specific ones. For example, the participant terminal 10 may be implemented by any computer such as a personal computer, a mobile terminal device, a wearable terminal, or the like. Furthermore, any peripheral device such as a display, a camera, a microphone, a speaker, a headset, and the like may be connected to the participant terminal 10. Note that the number of the participant terminals 10 illustrated in FIG. 1 is merely an example, and the number of the participant terminals 10 may of course increase or decrease depending on the number of participants of a web conference.

While an exemplary case where each of the participant terminals 10A to 10N executes an information sharing program for implementing the information sharing function described above to implement the remote conference system 1 will be described in the following descriptions as merely an example, the implementation example of the remote conference system 1 is not limited to this. For example, a server device (not illustrated) may provide the participant terminal 10 operating as a client terminal with a service corresponding to the information sharing function described above, such as a web service or a cloud service, to implement the remote conference system 1. In this case, it is also possible to make a part or all of the participant terminal 10 function as a thin client or a zero client by making the server device manage resources such as software, data, and the like.

Here, it is assumed that the participant terminal 10 operates under conditions listed in the following (A) to (H). Note that (A) to (H) are merely examples, and the information sharing function described above may be implemented even when a part thereof is omitted.

(A) Any data can be transmitted and received between he participant terminals 10A to 10N.
(B) The participant terminals 10 share a virtualized working space, which is what is called a workspace. (C) Each of the participant terminals 10A to 10N is capable of displaying any position in the workspace in any size in a workspace display window. Hereinafter, from the aspect that the position and size of the workspace display window may differ among the participant terminals 10A to 10N, a label of the workspace display window may be referred to as a "participant screen". The "screen" referred to here just indicates a window, and does not necessarily indicate the entire screen.
(D) A display range of the workspace displayed in the participant screen is zoomable through zoom operation, and is movable through scroll operation.
(E) In the workspace, documents and charts generated by any application program, windows of still images, moving images, and the like, labels on which handwritten characters may be input, various annotations, and the like may be arranged as "objects".
(F) In the workspace, instruction tools, such as pointers, markers, and the like, which may be shared among the individual participant terminals 10, may also be arranged as objects.
(G) The objects arranged in the workspace may be freely moved through drag operation or the like.

(H) The information sharing function described above may be used in combination with functions such as a voice call, screen sharing, chatting, and the like.

Even in a case where the instruction tool described above is used in such a remote conference system 1, its effect may not be exerted when the instruction tool operated in the workspace is outside the range displayed on the participant terminal 10. Therefore, there is an aspect that it is still difficult to implement display control for focusing on the point of interest of the workspace by using only the instruction tool described above.

In view of the above, in the present embodiment, a focus function, which receives an operation for focusing on the point of interest of the workspace shared among the plurality of participant terminals and calculates a display range of the workspace on the basis of the latest input of inputs from the plurality of participant terminals made before the operation, is subject to an add-on.

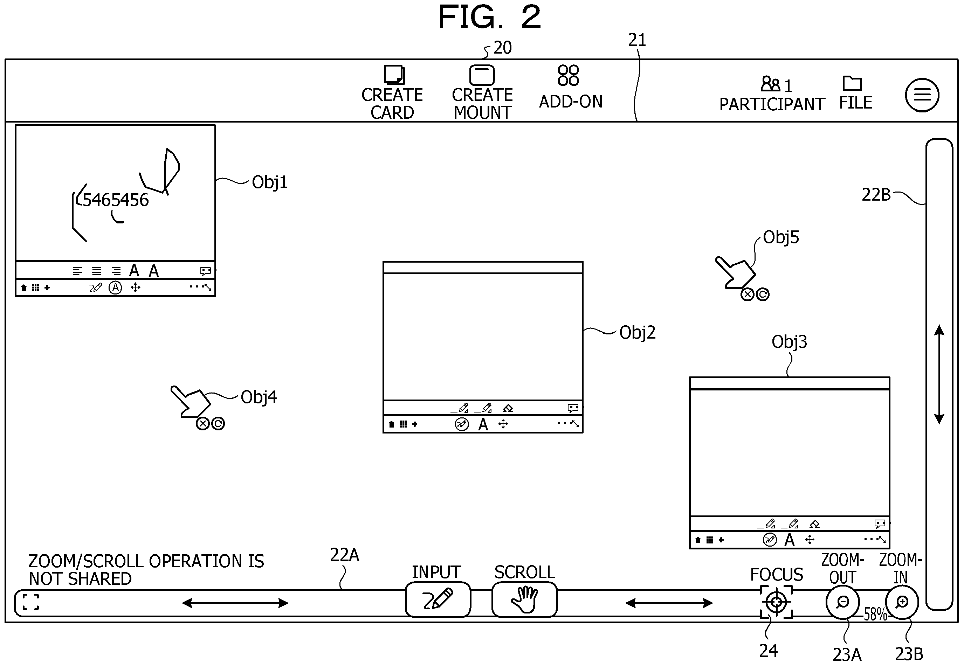

FIG. 2 is a diagram illustrating an exemplary participant screen. As illustrated in FIG. 2, a participant screen 20 includes a workspace display area 21.

As described in (C) above, any position in the workspace may be displayed in any size in the workspace display area 21. Those position and size may be set according to either user specification or system definition. Hereinafter, a range of the workspace displayed in the workspace display area may be referred to as a "display range".

In the example illustrated in FIG. 2, the display range of the workspace includes five objects of objects Obj1 to Obj5 arranged in the workspace shared between the participant terminals 10A to 10N.

Each of those objects Obj1 to Obj5 is generated by an application program that operates in the participant terminal 10. Hereinafter, the application program may be abbreviated as "App".

For example, the object Obj1 is generated by a mount App that provides a function of a mount on which other objects may be placed. Furthermore, the objects Obj2 and Obj3 are generated by a label App that provides a function of a label that allows text input and handwriting input. Furthermore, the objects Obj4 and Obj5 are generated by a pointer App that provides a function of a pointer corresponding to an example of the instruction tool. Hereinafter, the former may be referred to as an "instruction object" and the latter may be referred to as a "window object" from the aspect of distinguishing a label between an object corresponding to the instruction tool and an object corresponding the window generated by the application program.

While FIG. 2 illustrates an exemplary case where the objects generated by the mount App, the label App, and the pointer App are arranged in the workspace as merely an example, other objects other than the illustrated types of objects may be arranged in the workspace. For example, it is possible to arrange, as an object, a window of a document generated by word-processing software, spreadsheet software, presentation software, or the like, or a window including an image generated by various types of imaging software, such as a still image, a moving image, or the like in the workspace.

Moreover, as described in (D) above, the participant screen 20 includes scroll bars 22A and 22B as graphical user interface (GUI) parts that move in the display range of the workspace.

For example, while the display range of the workspace may be moved leftward or rightward by the scroll bar 22A operated, the display range of the workspace may be moved upward or downward by the scroll bar 22B operated.

Moreover, as described in (D) above, the participant screen 20 includes a zoom-out button 23A and a zoom-in button 23B as GUI parts that zooms the display range of the workspace.

As merely an example, the participant screen 20 includes a focus button 24 in which the focus function described above is iconized as a GUI part that receives an operation for focusing on the point of interest in the workspace. An operation performed on such a focus button 24 is used as a trigger to provide the focus function.

Although an exemplary case where a request for executing the focus function is received through a GUI operation will be described as merely an example, the form of receiving the request is not limited to this. For example, it is also possible to receive the request through a GUI operation other than the icon, through a software or hardware keyboard, or through a command input based on voice recognition.

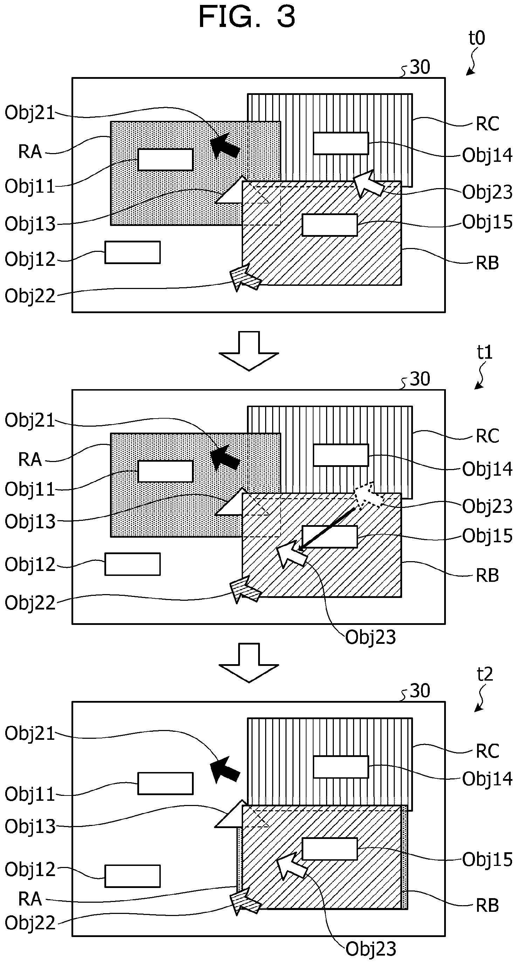

Next, an exemplary usage scene of the focus function described above will be described with reference to FIG. 3. FIG. 3 is a schematic diagram illustrating an exemplary transition of the workspace. FIG. 3 schematically illustrates a workspace 30 at each of three time points in time-series order of time t0, time t1, and time t2. While FIG. 3 illustrates the workspace 30 in which five window objects Obj11 to Obj15 and three instruction objects Obj21 to Obj23 are arranged, this is merely an example, and the type and number of objects are optional. Moreover, FIG. 3 illustrates an exemplary case where three participant terminals 10A, 10B, and 10C share the workspace 30, and illustrates display ranges of the workspace 30 of the participant terminals 10A, 10B, and 10C as RA, RB, and RC, respectively.

As illustrated in FIG. 3, at the time t0, while a part of the edges of the display ranges RA, RB, and RC overlap, the display ranges RA, RB, and RC are focused on different positions in the workspace 30, and the sizes of the individual display ranges RA, RB, and RC are also different.

For example, a case where a user UB of the participant terminal 10B gives an explanation while moving the instruction object Obj23 in the process of transitioning from the time t0 to the time t1 will be exemplified.

In this case, since the trajectory of the instruction object Obj23 in the period from the time t0 to the time t1 does not overlap with the display range RA, it is difficult to say that the instruction object Obj23 has a functional role for a user UA of the participant terminal 10A.

Accordingly, the user UA of the participant terminal 10A who is not enabled to check the movement of the instruction object Obj23 in the display range RA is not enabled to grasp where in the workspace 30 the user UB of the participant terminal 10B is pointing to for giving the explanation.

In such a usage scene, at the timing of the time t1, the user UA of the participant terminal 10A may operate the focus button 24 motivated by a desire to see the part explained by the user UB of the participant terminal 10B or the like.

In this case, the latest input of the inputs of the participant terminals 10A to 10C made by the time t1 at which the focus button 24 is operated may be identified as an operation of the instruction object Obj23 performed by the participant terminal 10B, which is a drag operation.

After the operation of the focus button 24 is performed in this manner, at the time t2, the display range RA of the user UA that has received the operation of the focus button 24 is adjusted to the display range RB of the user UB who has made the latest input.

As merely an example, the position of the display range RA of the user UA, for example, the center or the gravity center may be matched with the position of the display range RB of the user UB. At this time, the size of the display range RA of the user UA may be changed or not be changed before and after focusing on the position of the display range RA of the user UA.

According to the focus function described above, it becomes possible to focus on the point of interest of the workspace even in a case where a degree of overlapping of the display ranges in the workspace between the participants is equal to or less than a certain value, for example, in a case where the instruction tool being operated by another participant is outside the display range of the workspace or the like.

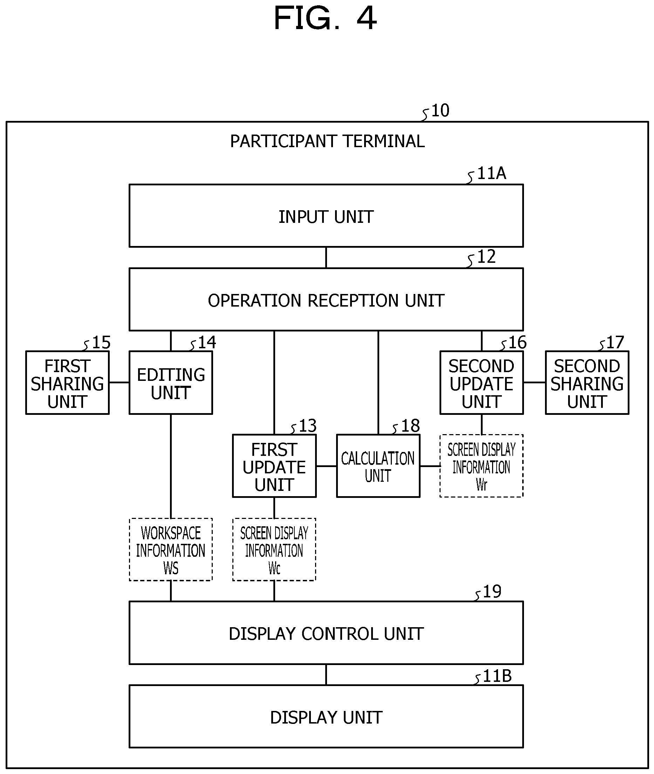

Next, an exemplary functional configuration of the participant terminal 10 equipped with the focus function described above will be described. FIG. 4 is a block diagram illustrating an exemplary functional configuration of the participant terminal 10. FIG. 4 schematically illustrates blocks corresponding to functions of the participant terminal 10. As illustrated in FIG. 4, the participant terminal 10 includes an input unit 11A, a display unit 11B, an operation reception unit 12, a first update unit 13, an editing unit 14, a first sharing unit 15, a second update unit 16, a second sharing unit 17, a calculation unit 18, and a display control unit 19.

Various types of information such as screen display information Wc, screen display information Wr, and workspace information WS illustrated in FIG. 4 may be stored in a storage unit (not illustrated) implemented by internal, external, or auxiliary storage. Note that a part or all of the various types of information may not necessarily be stored in the storage, and may be saved in a memory (not illustrated).

Both of the screen display information Wc and the screen display information Wr are information associated with the display range of the workspace. Of these, the screen display information Wc corresponds to the participant screen of its own terminal among the participant terminals 10A to 10N. On the other hand, the screen display information Wr corresponds to the participant screen of the participant terminal 10 that has last performed the operation on the instruction object among the participant terminals 10A to 10N. Accordingly, as the screen display information Wr, the information corresponding to the participant screen of its own terminal may be saved, or the information corresponding to the participant screen of another terminal may be saved.

The screen display information Wc and the screen display information Wr may be defined using workspace coordinates $(x, y)$ expressed in the coordinate system of the workspace. As merely an example, it may be expressed by three elements including a position $(cx, cy)$ in the workspace corresponding to the center of the participant screen, a width $w$ in the workspace corresponding to the right and left range of the participant screen, and a height $h$ in the workspace corresponding to the upper and lower range of the participant screen.

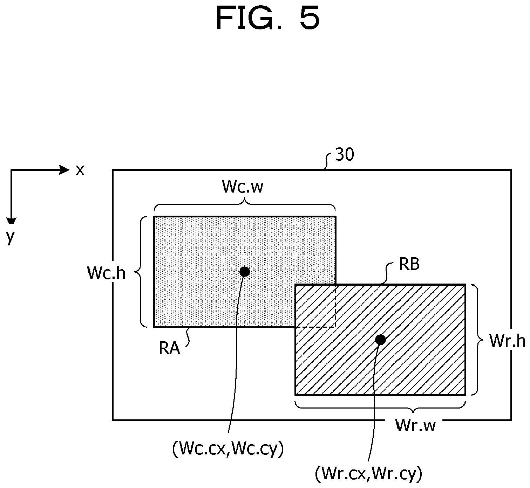

FIG. 5 is a diagram illustrating an exemplary method of defining the screen display information. FIG. 5 illustrates an exemplary case where the participant terminal 10A is treated as a host terminal and the display range RA of the workspace 30 illustrated in FIG. 3 is defined as the screen display information Wc. In this case, the display range RA may be defined as the screen display information Wc by a screen central position $(Wc.cx, Wc.cy)$, a screen width $Wc.w$, and a screen height $Wc.h$. Moreover, FIG. 5 illustrates an exemplary case where the display range RB of the workspace 30 corresponding to the participant terminal 10B that has last performed the operation on the instruction object is defined as the screen display information Wr. In this case, the display range RB may be defined as the screen display information Wr by a screen central position $(Wr.cx, Wr.cy)$, a screen width $Wr.w$, and a screen height $Wr.h$.

Moreover, the screen display information Wc may further include a ratio $Wc.r$ between screen coordinates expressed by the screen coordinate system of the display unit 11B of the participant terminal 10 and the workspace coordinates. Such a ratio $Wc.r$ has an aspect that indicates how many times of the screen coordinates are one unit of the workspace coordinates.

As merely an example, in the case of using the screen coordinate system, the display range of the workspace may be expressed as follows. For example, it may be expressed by three elements including a position $(S.cx, S.cy)$ on the screen corresponding to the center of the participant screen, a width S.w on the screen corresponding to the right and left range of the participant screen, and a height S.h on the screen corresponding to the upper and lower range of the participant screen.

In this case, the workspace coordinates (x, y) may be converted into screen coordinates (X, Y) by the following expressions (1) and (2). With the conversion from the workspace coordinates (x, y) to the screen coordinates (X, Y) according to the conversion expressions of the following expressions (1) and (2), images included in the display range corresponding to the screen display information Wc in the workspace may be mapped to the participant screen.

$$X \leftarrow (x - Wc.cx) * Wc.r + S.cx ...(1)$$

$$Y \leftarrow (y - Wc.cy) * Wc.r + S.cy ...(2)$$

The workspace information WS is information associated with the workspace. As merely an example, the workspace information WS may include a list of App information A1 to An corresponding to the number n of the objects arranged in the workspace. For example, App information Ai ($0 \leq i \leq n$) may include App-specific data Ai.data corresponding to an index i, and position/size information Ai.pos including the position and size of the object generated by the App corresponding to the index i. Moreover, the position/size information Ai.pos may include a central position (pos.cx, pos.cy) of the object in the workspace, a width pos.w of the object in the workspace, and a height pos.h of the object in the workspace.

The description returns to FIG. 4. The input unit 11A is a functional unit for inputting various operations. As merely an example, in a case where the participant terminal 10 is implemented by a desktop or laptop personal computer, the input unit 11A may be implemented by a general-purpose peripheral device such as a keyboard, a mouse, or the like.

The display unit 11B is a functional unit for displaying various types of information. As merely an example, the display unit 11B may be implemented by a liquid crystal display, an organic electro luminescence (EL) display, or the like.

Those input unit 11A and the display unit 11B may be integrated as a display input unit implemented by a touch panel or the like.

Of the functional units illustrated in FIG. 4, the processing units such as the operation reception unit 12, the first update unit 13, the editing unit 14, the first sharing unit 15, the second update unit 16, the second sharing unit 17, the calculation unit 18, the display control unit 19, and the like are virtually implemented by a hardware processor. This is merely an example, and each of the processing units may be implemented by hard-wired logic.

The operation reception unit 12 is a processing unit that receives various operation events via the input unit 11A. In one aspect, the operation reception unit 12 is capable of receiving a scroll operation and a zoom operation on the participant screen. For example, in the example of the participant screen 20 illustrated in FIG. 2, it is possible to receive a scroll operation for moving the display range of the workspace 30 in the vertical direction or in the horizontal direction through the operation performed on the scroll bars 22A and 22B. In addition, it is also possible to receive the scroll operation through a right-drag operation of the mouse. Furthermore, it is possible to receive a zoom operation for zooming in or out the display range of the workspace 30 through an operation performed on the zoom-out button 23A and the zoom-in button 23B. In addition, it is also possible to receive the zoom operation through a pinch gesture such as pinch-out or pinch-in operation, or a rotating operation of a mouse wheel or the like.

In another aspect, the operation reception unit 12 is also capable of receiving a moving operation of an object included in the workspace, such as a window object, an instruction object, or the like. For example, it is possible to receive a moving operation for moving an object on which a drag operation is performed to a position where a drop operation is performed through a drag-drop operation performed on the object.

In a further aspect, the operation reception unit 12 is also capable of receiving a focus operation. For example, in the example of the participant screen 20 illustrated in FIG. 2, it is possible to receive, through an operation performed on the focus button 24 in which the focus function described above is iconized, a request for executing the focus function for focusing on the point of interest in the workspace.

The first update unit 13 is a processing unit that updates the screen display information Wc. As merely an example, in a case where the operation event received by the operation reception unit 12 is a scroll operation or a zoom operation, the first update unit 13 updates the screen display information Wc on the basis of the scroll operation or the zoom operation.

The scroll operation will be exemplified as one aspect. In this case, the first update unit 13 adds, to a coordinate value of the axis corresponding to the scroll direction of the screen central position (Wc.cx, Wc.cy) included in the screen display information Wc, a movement amount corresponding to the scroll amount with a code corresponding to the scroll direction. As a result, while the participant screen scrolls to the right when the value of Wc.cx increases, the participant screen scrolls to the left when the value of Wc.cx decreases. Furthermore, while the participant screen scrolls downward when the value of Wc.cy increases, the participant screen scrolls upward when the value of Wc.cy decreases.

The zoom operation will be exemplified as another aspect. In this case, the first update unit 13 multiplies the ratio Wc.r included in the screen display information Wc by a zoom magnification corresponding to the operation amount of zooming out or zooming in. As a result, while the participant screen is subject to zoom-in of m times when the value of Wc.r increases m times, the participant screen is subject to zoom-out of 1/m times when the value of Wc.r increases 1/m times.

The editing unit 14 is a processing unit that edits the workspace. In one aspect, in a case where the operation event received by the operation reception unit 12 is an object moving operation, the editing unit 14 edits the workspace information WS on the basis of the moving operation. More specifically, the editing unit 14 identifies the identification information of the object in which the moving operation is detected among the App information A1 to An included in the workspace information WS, which is, for example, App information $A_{ID}$ corresponding to the identification (ID). Then, the editing unit 14 updates position/size information $A_{ID}.pos$ included in the App information $A_{ID}$ on the basis of the current position of the object. In another aspect, in a case where object movement information is shared from another participant terminal 10 via the first sharing unit 15 to be described later, the editing unit 14 updates the workspace information WS on the basis of the movement information. More specifically, the editing unit 14 identifies the App information $A_{ID}$ corresponding to the identification information of the object included in the movement information shared through the first sharing unit 15 among the App information A1 to An included in the workspace information WS. Then, the editing unit 14 updates the position/size information $A_{ID}.pos$ included in the App information $A_{ID}$ on the basis of the current position of the object included in the movement information.

The first sharing unit 15 is a processing unit that shares the workspace information WS between its own terminal and another participant terminal 10. In one aspect, in a case where the workspace information WS is updated by the editing unit 14, the first sharing unit 15 executes the following process from the aspect of sharing the contents updated by the editing unit 14. For example, the first sharing unit 15 broadcasts, to the another participant terminal 10, the identification information of the object corresponding to the contents updated by the editing unit 14 and the movement information of the object including the current position of the object. In another aspect, in a case where the object movement information is received from the another participant terminal 10, the first sharing unit 15 outputs the object movement information to the editing unit 14 from the aspect of sharing the updated contents of the workspace information WS in the another participant terminal 10.

The second update unit 16 is a processing unit that updates the screen display information Wr. In one aspect, in a case where the operation event received by the operation reception unit 12 is the object moving operation, the second update unit 16 determines whether or not the object in which the moving operation is detected is an instruction object. Here, in a case where the object in which the moving operation is detected is an instruction object, it is possible to identify that the participant terminal 10 that has last performed the operation on the instruction object is the host terminal among the participant terminals 10A to 10N. In this case, the second update unit 16 updates the screen display information Wr on the basis of the screen display information Wc saved in the host terminal. In another aspect, in a case where the screen display information is shared from another participant terminal 10 via the second sharing unit 17 to be described later, the second update unit 16 overwrites the screen display information shared through the second sharing unit 17 to the screen display information Wr, and performs updating.

The second sharing unit 17 is a processing unit that shares the screen display information Wr between its own terminal and another participant terminal 10. In one aspect, in a case where the object in which the moving operation is detected is an instruction object, the second sharing unit 17 executes the following process from the aspect of sharing the contents updated by the second update unit 16 with the another participant terminal 10. For example, the second sharing unit 17 broadcasts the screen display information corresponding to the contents updated by the second update unit 16 to the another participant terminal 10. In another aspect, in a case where the screen display information is received from the another participant terminal 10, the second sharing unit 17 is capable of identifying that the participant terminal 10 that has last performed the operation on the instruction object is the participant terminal 10 of the transmission source among the participant terminals 10A to 10N. In this case, from the aspect of sharing the screen display information of the participant terminal 10 of the transmission source, the second sharing unit 17 outputs the screen display information received from the another participant terminal 10 to the second update unit 16.

The calculation unit 18 is a processing unit that calculates a display range of the workspace. In one aspect, in a case where the operation event received by the operation reception unit 12 is a focus operation, the calculation unit 18 calculates the screen display information Wc on the basis of the screen display information Wr. As merely an example, the calculation unit 18 causes the position of the display range of the workspace of its own terminal to match with the position of the display range of the workspace of the participant terminal 10 that has last performed the operation on the instruction object. Hereinafter, the participant terminal 10 that has last performed operation on the instruction object may be referred to as a "final operation terminal". In this case, the calculation unit 18 calculates the screen central position (Wr.cx, Wr.cy) of the final operation terminal included in the screen display information Wr as the screen central position (Wc.cx, Wc.cy) of its own terminal according to the following expressions (3) and (4). As a result of positional adjustment of the display range wc executed by such calculation of the display range Wc, it becomes possible to implement the focus function described above.

$$Wc.cx \leftarrow Wr.cx...(3)$$

$$Wc.cy \leftarrow Wr.cy...(4)$$

Here, the resolution and aspect ratio of the screen may differ among the individual participant terminals 10. In view of the above, size adjustment of the display range Wc after the focusing may be further implemented by calculating the ratio Wc.r described above according to a calculation method expressed in the following equation (5) or (6) in addition to the positional adjustment described above.

$$f(Sw, Sh, Wr.w, Wr.h) = min(Sw, Sh)/min(Wr.w, Wr.h)...(5)$$

$$f(Sw, Sh, Wr.w, Wr.h) = min(Sw/Wr.w, Sh/Wr.h)...(6)$$

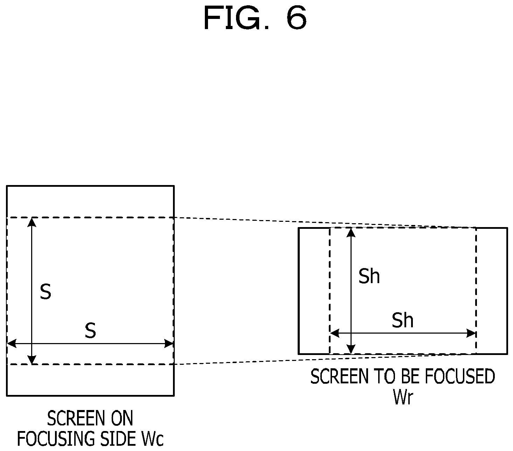

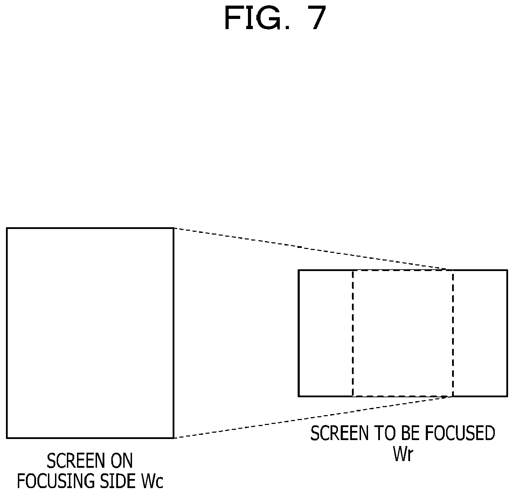

FIGs. 6 and 7 are diagrams illustrating an exemplary method of calculating the ratio Wc.r. In FIGs. 6 and 7, the display range Wc of the host terminal on the focusing side and the display range Wr of the participant terminal 10 on the focused side are illustrated by solid lines, and the display range Wc of the host terminal after the focusing is illustrated by a broken line.

For example, in a case of calculating the ratio Wc.r according to the equation (5) mentioned above, as illustrated in FIG. 6, size adjustment is executed in such a manner that the length of the short side of the display range Wc of the host terminal on the focusing side is adjusted to the length of the short side of the display range Wr of the participant terminal 10 on the focused side.

Furthermore, in a case of calculating the ratio Wc.r according to the equation (6) mentioned above, as illustrated in FIG. 7, size adjustment is executed in such a manner that the entire display range Wc of the host terminal on the focusing side is within the display range Wr of the participant terminal 10 on the focused side.

On the basis of the screen central position (Wc.cx, Wc.cy) and the ratio Wc.r calculated in this manner, the screen display information Wc is updated by the first update unit 13.

The display control unit 19 is a processing unit that executes display control of the participant screen. In one aspect, in a case where at least one of the workspace information WS and the screen display information Wc is updated, the display control unit 19 updates the participant screen according to the workspace information WS and the screen display information Wc. For example, the display control unit 19 maps, to the participant screen, the image of the display range corresponding to the screen display information Wc among the workspace images rendered on the basis of the workspace information WS according to the conversion expressions of the expressions (1) and (2) mentioned above.

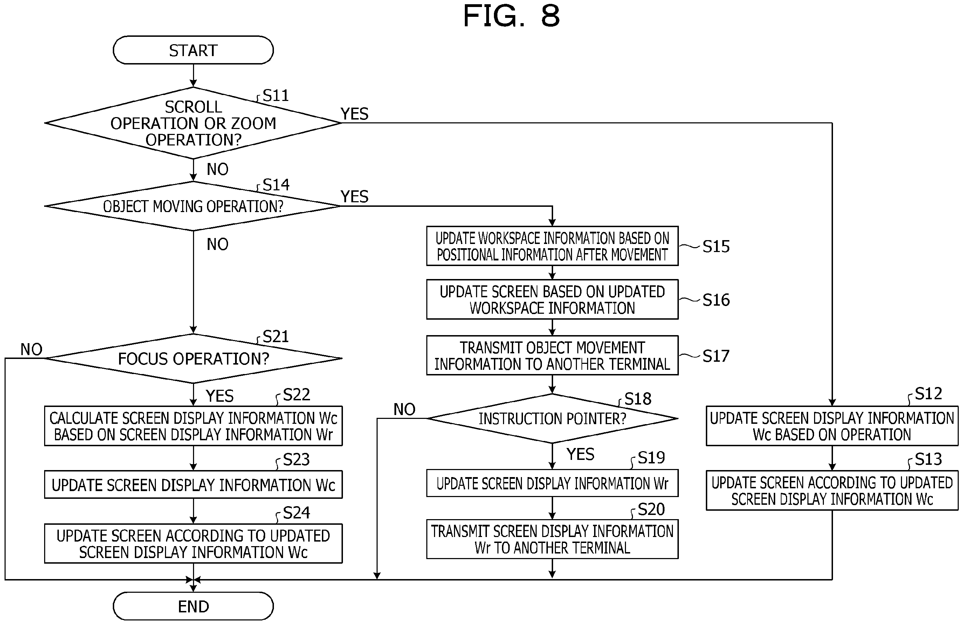

Next, a process flow of the participant terminal 10 according to the present embodiment will be described. FIG. 8 is a flowchart illustrating a processing procedure when an operation event occurs. The process illustrated in FIG. 8 starts when the operation event occurs as merely an example.

As illustrated in FIG. 8, if the operation event is a scroll operation or a zoom operation (Yes in step S11), the first update unit 13 updates the screen display information Wc on the basis of the scroll operation or the zoom operation (step S12). Then, the display control unit 19 updates the participant screen on the basis of the workspace information WS and the screen display information Wc updated in step S12 (step S13), and the process is terminated.

Furthermore, if the operation event is an object moving operation (Yes in step S14), the editing unit 14 edits the workspace information WS on the basis of the moving operation (step S15).

Subsequently, the display control unit 19 updates the participant screen on the basis of the workspace information WS updated in step S15 and the screen display information Wc (step S16). Moreover, the first sharing unit 15 transmits, to another participant terminal 10, identification information of the object corresponding to the updated contents of step S15 and object movement information including the current position (step S17).

Then, if the object in which the moving operation is detected is an instruction object (Yes in step S18), the second update unit 16 updates the screen display information Wr on the basis of the screen display information Wc saved in its own terminal (step S19). Moreover, the second sharing unit 17 transmits the screen display information corresponding to the updated contents of step S19 to the another participant terminal 10 (step S20), and the process is terminated.

Furthermore, if the operation event is a focus operation (Yes in step S21), the calculation unit 18 calculates a display range of the workspace of its own terminal on the basis of the screen display information Wr (step S22). Subsequently, the first update unit 13 updates the screen display information Wc on the basis of the display range of the workspace calculated in step S22 (step S23).

Thereafter, the display control unit 19 updates the participant screen on the basis of the workspace information WS and the screen display information Wc updated in step S23 (step S24), and the process is terminated.

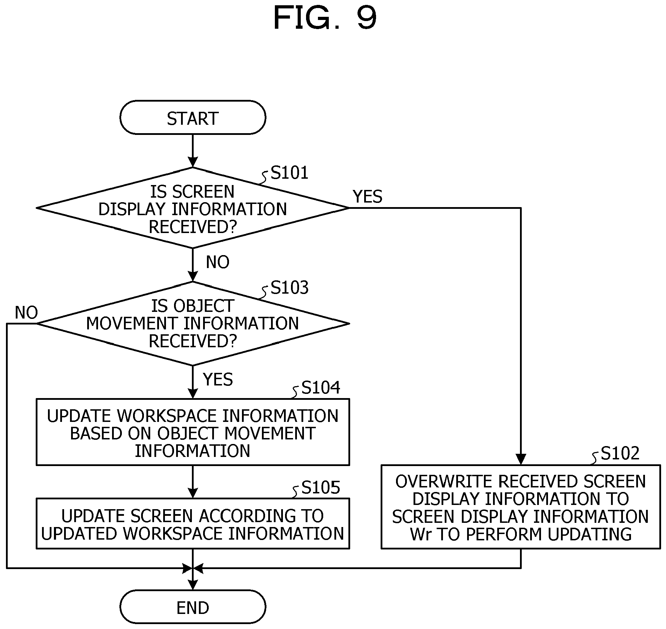

FIG. 9 is a flowchart illustrating a processing procedure when a reception event occurs. The process illustrated in FIG. 9 starts when the reception event occurs as merely an example. As illustrated in FIG. 9, if the screen display information is received from another participant terminal 10 in the reception event (Yes in step S101), the second update unit 16 overwrites the screen display information received from the another participant terminal 10 to the screen display information Wr to perform updating (step S102), and the process is terminated.

Meanwhile, if the object movement information is received from the another participant terminal 10 in the reception event (Yes in step S103), the editing unit 14 edits the workspace information WS on the basis of the movement information (step S104). Then, the display control unit 19 updates the participant screen on the basis of the workspace information WS updated in step S104 and the screen display information Wc (step S105), and the process is terminated.

As described above, the participant terminal 10 receives the operation for focusing on the point of interest of the workspace shared among the plurality of participant terminals, and calculates the display range of the workspace on the basis of the latest input of inputs from the plurality of participant terminals made before the operation. Therefore, according to the participant terminal 10, it becomes possible to focus on the point of interest of the workspace even when the degree of overlapping of the display ranges in the workspace between the participants is equal to or less than a certain value.

[Second Embodiment]

While the embodiment related to the disclosed device has been described above, the embodiment may be carried out in a variety of different modes in addition to the embodiment described above. Thus, hereinafter, an application example included in the embodiments will be described.

While an exemplary case where the latest input as a criterion for determining the focus destination to which the display range of the workspace of its own terminal is positioned is set as the operation of the instruction object has been described in the first embodiment above, it is not limited to this example.

For example, it is also possible to implement a first application example in which the latest utterance in a voice call made between participant terminals 10A to 10N is used as a criterion for determining a focus destination. In this case, it is sufficient if a participant terminal 10 executes the following process instead of steps S18 and S19 illustrated in FIG. 8.

For example, in a case where an audio input with a sound volume of equal to or more than a threshold value Th1 and a length of equal to or more than a threshold value Th2 is made from an audio input unit (not illustrated), such as a microphone or the like, it is possible to detect that utterance is given by a participant of its own terminal.

In this case, the second update unit 16 updates the screen display information Wr on the basis of the screen display information Wc saved in the host terminal. Moreover, a second sharing unit 17 transmits screen display information corresponding to the updated contents to another participant terminal 10.

As a result, it becomes possible to match the position of the display range of the workspace in its own terminal to the position of the display range of the workspace of the participant terminal 10 in which the latest utterance is detected in the voice call.

Furthermore, while an exemplary case where the position of the display range of the workspace of its own terminal is matched with the position of the display range of the workspace of the participant terminal 10 that has last performed the operation on the instruction object has been described in the first embodiment above, it is not limited to this example.

For example, it is also possible for the participant terminal 10 to implement a second application example in which the position of the display range of the workspace of its own terminal is adjusted to a position of a window object that overlaps the instruction object on which the operation has been last performed.

In this case, the participant terminal 10 retains identification information $A_{ID}$ of the window object that overlaps the instruction object on which the operation has been last performed instead of the screen display information Wr of the participant terminal 10 that has last performed the operation on the instruction object.

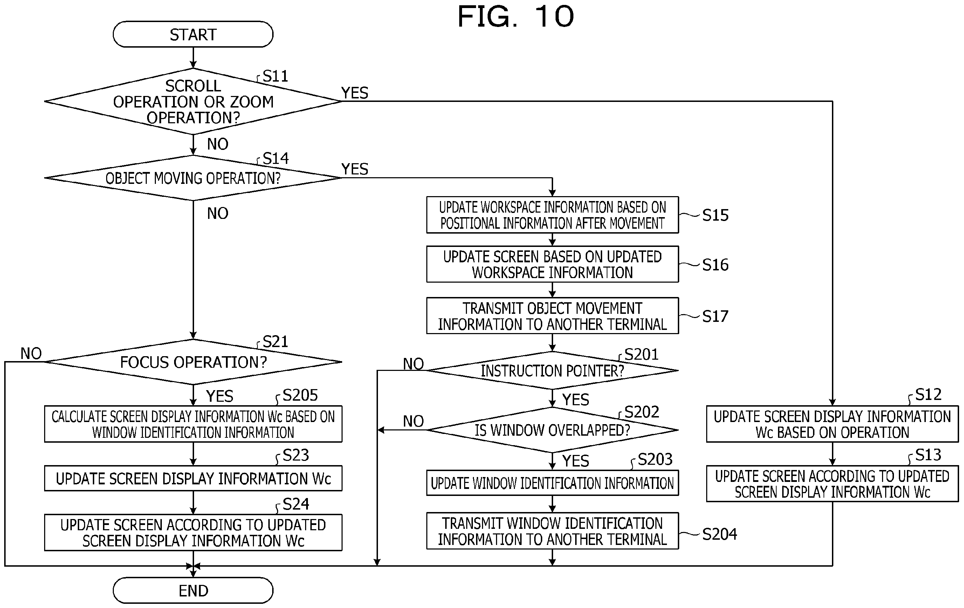

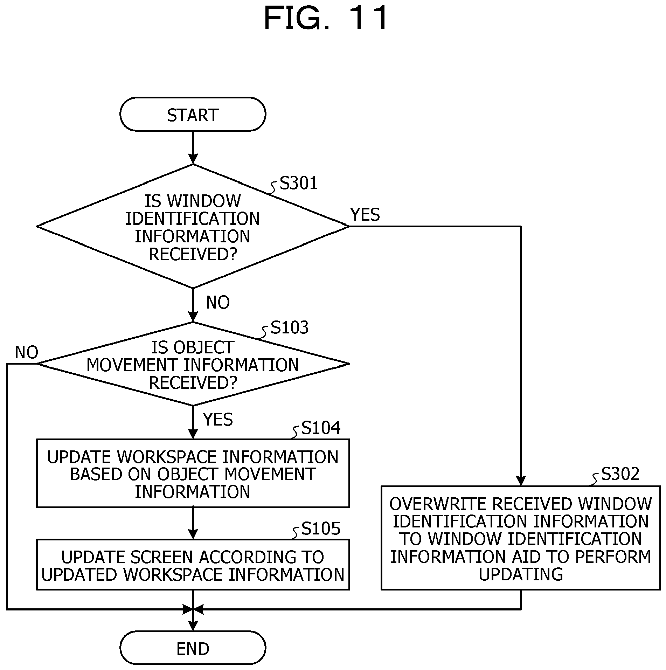

Then, it is possible to implement the second application example described above by executing the process illustrated in FIGs. 10 and 11 instead of the process illustrated in FIGs. 8 and 9.

FIG. 10 is a flowchart illustrating a processing procedure when the operation event occurs. In FIG. 10, different step numbers are assigned to steps with processing different from that of the flowchart illustrated in FIG. 8.

In the flowchart illustrated in FIG. 10, a process after step S17 is different from that of the flowchart illustrated in FIG. 8. After step S17, the following process is executed if an object in which a moving operation is detected is an instruction object and the instruction object overlaps a window object (Yes in step S201 and Yes in step S202).

For example, the second update unit 16 updates the identification information $A_{ID}$ of the window object on the basis of the identification information of the window object that overlaps the instruction object (step S203). Moreover, the second sharing unit 17 transmits the identification information of the window object to another participant terminal 10 (step S204), and the process is terminated.

Moreover, in the flowchart illustrated in FIG. 10, a process after the Yes-branch of step S21 is different from that of the flowchart illustrated in FIG. 8.

For example, if the operation event is a focus operation (Yes in step S21), a calculation unit 18 executes the following process. For example, the calculation unit 18 calculates a display range of the workspace of its own terminal on the basis of position/size information pos of App information $A_{ID}$ corresponding to the identification information $A_{ID}$ of the window object among App information A1 to An of workspace information WS (step S205).

For example, it is sufficient if the calculation unit 18 calculates a screen central position (pos.cx, pos.cy) of the window object corresponding to the identification information $A_{ID}$ as a position (Wc.cx, Wc.cy) of the display range of the workspace of its own terminal. Moreover, the calculation unit 18 may also calculate a ratio Wc.r according to the following equation (7) as merely an example. In the equation (7) set out below, "a" is a constant, and for example, a value less than 1 may be set. In a case where the ratio Wc.r is calculated according to the equation (7) set out below, it becomes possible to implement size adjustment in which the window object matches the display range Wc of the participant screen.

$$f(Sw, Sh, Pw, Ph) \ = \ min(Sw/Pw, Sh/Ph) * a \ldots (7)$$

Subsequently, the first update unit 13 updates the screen display information Wc on the basis of the display range of the workspace calculated in step S205 (step S23). Thereafter, the display control unit 19 updates the participant screen on the basis of the workspace information WS and the screen display information Wc updated in step S23 (step S24), and the process is terminated.

FIG. 11 is a flowchart illustrating a processing procedure when the reception event occurs. In FIG. 11, different step numbers are assigned to steps with processing different from that of the flowchart illustrated in FIG. 9.

In the flowchart illustrated in FIG. 11, the process of steps S101 and S102 in the flowchart illustrated in FIG. 9 is replaced with a process of steps S301 and S302.

For example, as illustrated in FIG. 11, if window identification information is received from another participant terminal 10 in the reception event (Yes in step S301), the second update unit 16 overwrites the window identification information received from the another participant terminal 10 to the window identification information $A_{ID}$ to perform updating (step S302), and the process is terminated.

According to the process described above, it becomes possible to match the position of the display range of the workspace of its own terminal with the position of the window object that overlaps the instruction object on which the operation has been last performed.

In addition to those first and second application examples, the participant terminal 10 is also capable of implementing a third application example in which a moving operation for moving a window object with a movement locus of a specific pattern is used as a criterion for determining a focus destination.

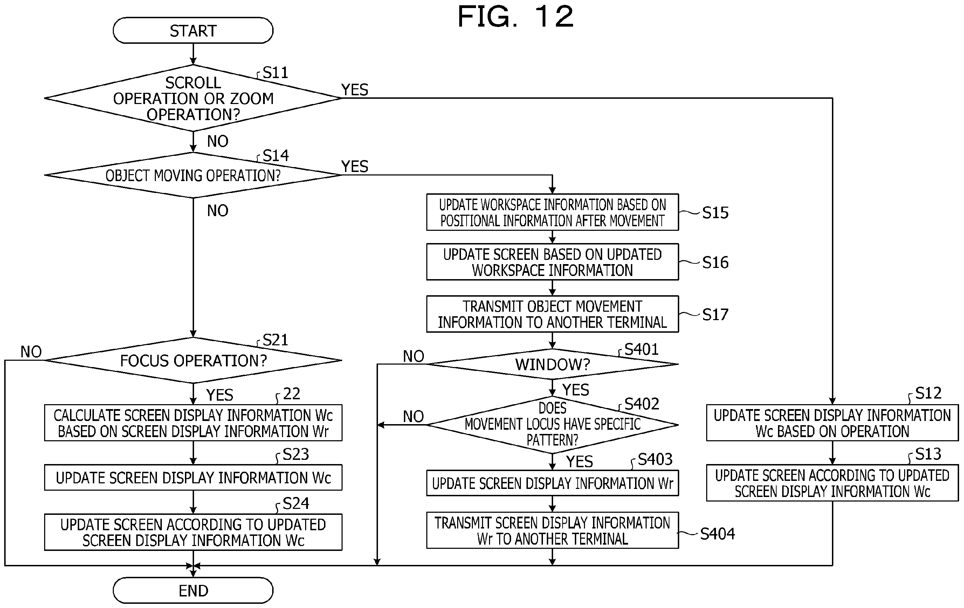

In this case, it is possible to implement the third application example described above by executing the process illustrated in FIG. 12 instead of the process illustrated in FIG. 8.

FIG. 12 is a flowchart illustrating a processing procedure when the operation event occurs. In FIG. 12, different step numbers are assigned to steps with processing different from that of the flowchart illustrated in FIG. 8.

In the flowchart illustrated in FIG. 12, a process after step S17 is different from that of the flowchart illustrated in FIG. 8. After step S17, the following process is executed if the object in which the moving operation is detected is a window object and the movement locus has a specific pattern (Yes in step S401 and Yes in step S402).

Examples of the specific pattern described above include a specific figure such as a polygon or an ellipse, specific characters such as English characters, and the like. In addition, the specific pattern may be vertical movement, horizontal movement, or the like. Note that it is of course possible to use any collation technique, such as pattern matching, gesture recognition, or the like, to perform collation between the window object and the specific pattern.

For example, the second update unit 16 updates the screen display information Wr on the basis of the screen display information Wc saved in its own terminal (step S403). Moreover, the second sharing unit 17 transmits the screen display information corresponding to the updated contents of step S403 to another participant terminal 10 (step S404), and the process is terminated.

According to the process above, it becomes possible to match the position of the display range of the workspace of its own terminal with the position of the display range of the participant terminal 10 that has performed the moving operation of the window object with the specific pattern.

As another application example, the participant terminal 10 broadcasts the identification information and the screen display information Wc of its own terminal to another participant terminal 10 each time a scroll operation or a zoom operation is performed. As a result, in each participant terminal 10, the screen display information is associated and retained for each identification information of the participant terminal 10. Moreover, the participant terminal 10 broadcasts the identification information of its own terminal to the another participant terminal 10 each time the moving operation of the instruction object is performed. As a result, in each participant terminal 10, the identification information of the participant terminal 10 that has last performed the operation on the instruction object is retained. When a focus operation is received under such information management, the participant terminal 10 updates the display range on the basis of the screen display information corresponding to the identification information of the participant terminal 10 that has last performed the operation on the instruction object. As a result, even in a case where a scroll operation or a zoom operation is performed after the instruction object is operated by the participant terminal 10 that has last performed the operation on the instruction object, it becomes possible to focus on the display range after the scroll operation or the zoom operation.

Note that, although the focus button 24 illustrated in FIG. 2 has been exemplified in the first embodiment described above, the focus button may be provided for each participant. In a case where the focus button is provided for each participant in such a manner, it becomes possible to adjust the display range of its own terminal to the display range of the participant terminal 10 corresponding to the focus button on which the operation is performed. In this case, the participant terminal 10 is enabled to differentiate the display form of the focused participant terminal 10 from other participant terminals 10 in the list of the participant terminals 10A to 10N. For example, in the list, it is also possible to display the focused participant terminal 10 in an emphasized manner and to display other participant terminals 10 in a normal manner.

Furthermore, while an exemplary case where the position of the display range of the workspace of its own terminal is matched with the position of the display range of the workspace of the participant terminal 10 that has last performed the operation on the instruction object has been described in the first embodiment above, it is not limited to this example. For example, the participant terminal 10 may adjust the position of the display range of the workspace of its own terminal to the position of the instruction object on which the operation has been last performed. In this case, it is sufficient if the screen central position of the instruction object is calculated as a screen central position (Wc.cx, Wc.cy) of its own terminal.

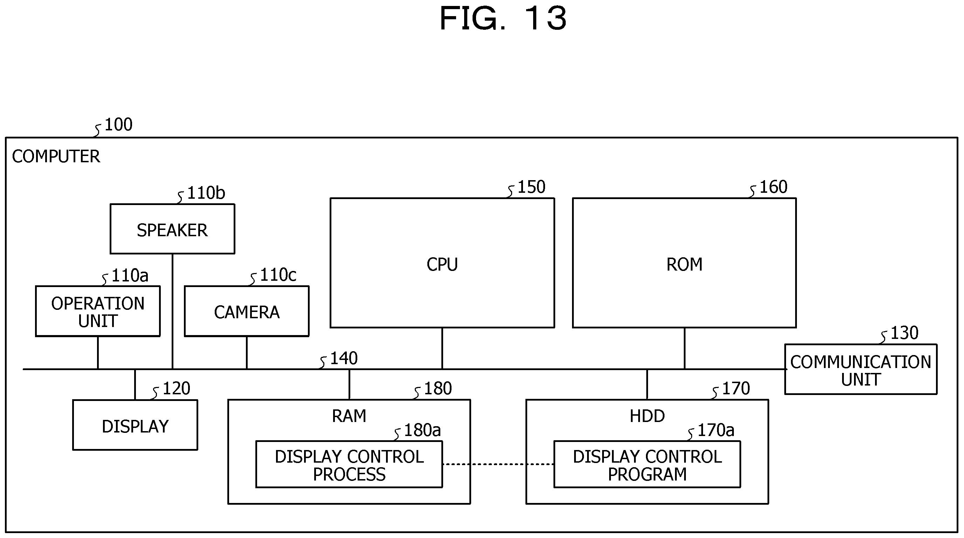

Furthermore, various kinds of processing described in the first and second embodiments above may be implemented by a computer such as a personal computer or a workstation executing a program prepared in advance. Thus, hereinafter, an exemplary computer that executes a display control program having functions similar to those in the first and second embodiments will be described with reference to FIG. 13.

FIG. 13 is a diagram illustrating an exemplary hardware configuration. As illustrated in FIG. 13, a computer 100 includes an operation unit 110a, a speaker 110b, a camera 110c, a display 120, and a communication unit 130. Furthermore, the computer 100 includes a central processing unit (CPU) 150, a read only memory (ROM) 160, a hard disk drive (HDD) 170, and a random access memory (RAM) 180. Those individual units 110 to 180 are connected via a bus 140.

The HDD 170 stores a display control program 170a that implements functions similar to those of the operation reception unit 12, the first update unit 13, the editing unit 14, the first sharing unit 15, the second update unit 16, the second sharing unit 17, the calculation unit 18, and the display control unit 19 indicated in the first embodiment described above. The display control program 170a may be integrated or separated in a similar manner to the individual components of the processing units illustrated in FIG. 4. For example, the HDD 170 does not necessarily store all the data indicated in the first and second embodiments described above, and it is sufficient if the HDD 170 stores only data for use in processing.

Under such an environment, the CPU 150 reads out the display control program 170a from the HDD 170, and loads it in the RAM 180. As a result, the display control program 170a functions as a display control process 180a as illustrated in FIG. 13. The display control process 180a loads various types of data read from the HDD 170 in an area allocated to the display control process 180a in a storage area included in the RAM 180, and executes various types of processing using the various types of loaded data. For example, examples of the processing to be executed by the display control process 180a may include the processing illustrated in FIGs. 8 to 12 and the like. Note that all the processing units indicated in the first embodiment described above do not necessarily operate in the CPU 150, and it is sufficient if only a processing unit corresponding to processing to be executed is virtually implemented.

Note that the display control program 170a described above is not necessarily stored in the HDD 170 or the ROM 160 from the beginning. For example, the display control program 170a is stored in a "portable physical medium" such as a flexible disk, which is what is called an FD, a compact disc (CD)-ROM, a digital versatile disk (DVD), a magneto-optical disk, or an integrated circuit (IC) card to be inserted in the computer 100. Then, the computer 100 may obtain the display control program 170a from those portable physical media to execute it. Furthermore, the display control program 170a is stored in another computer, a server device, or the like connected to the computer 100 via a public line, the Internet, a LAN, a wide area network (WAN), or the like. The computer 100 may be caused to download the display control program 170a stored in this manner to execute it.

**Claims**

1. A method of display control for causing a computer to execute a process comprising:

   receiving an operation that focuses on a point of interest of a virtual workspace shared among a plurality of terminals;
   calculating a display range of the virtual workspace on a basis of, of inputs made by the plurality of terminals, a latest input made before the operation is received; and
   updating a display window of the virtual workspace displayed on a terminal from which the operation is received on a basis of the display range.

2. The method according to claim 1, wherein
   the display range corresponds to a position of a window of a terminal that has last performed an operation on an instruction object among objects arranged in the virtual workspace.

3. The method according to claim 1, wherein
   the display range corresponds to a position of a window object that overlaps an instruction object that has last been operated among objects arranged in the virtual workspace.

4. The method according to claim 1, wherein
   the display range corresponds to a position of a window of a terminal that has last made utterance in a voice call made among the plurality of terminals.

5. The method according to claim 1, wherein
   the display range corresponds to a position of a window of a terminal that has last performed a moving operation of an object arranged in the virtual workspace with a movement locus of a specific pattern.

6. The method according to claim 1, wherein
   the display range corresponds to a position of an instruction object that has last been operated among objects arranged in the virtual workspace.

7. A program of display control, the program comprising instructions which, when executed by a computer, cause a computer to execute processing, the processing comprising:

   receiving an operation that focuses on a point of interest of a virtual workspace shared among a plurality of terminals;
   calculating a display range of the virtual workspace on a basis of, of inputs made by the plurality of terminals, a latest input made before the operation is received; and
   updating a display window of the virtual workspace displayed on a terminal from which the operation is received on a basis of the display range.

# FIG. 1

1

NW

| PARTICIPANT TERMINAL | | PARTICIPANT TERMINAL | ... | PARTICIPANT TERMINAL |

10A         10B                    10N

# FIG. 2

CREATE CARD  20
CREATE MOUNT  21
ADD-ON
PARTICIPANT  1
FILE

Obj1
5465456

22B

Obj5
Obj2
Obj3

Obj4

ZOOM/SCROLL OPERATION IS NOT SHARED  22A

INPUT
SCROLL
FOCUS  24
ZOOM-OUT  23A
ZOOM-IN  23B
58%

EP 4 181 114 A1

# FIG. 3

t0

30

Obj21
RA
Obj11
Obj13
Obj12
Obj22

RC
Obj14
Obj23
Obj15
RB

t1

30

Obj21
RA
Obj11
Obj13
Obj12
Obj22

RC
Obj14
Obj23
Obj15
RB

Obj23

t2

30

Obj21
Obj11
Obj13
Obj12
RA
Obj22

RC
Obj14
Obj15
RB

Obj23

# FIG. 4

# FIG. 5

# FIG. 6

S

S

Sh

Sh

SCREEN TO BE FOCUSED
Wr

SCREEN ON
FOCUSING SIDE Wc

# FIG. 7

SCREEN ON
FOCUSING SIDE Wc

SCREEN TO BE FOCUSED
Wr

# FIG. 8

START

S11 — SCROLL OPERATION OR ZOOM OPERATION?
- YES → S12 — UPDATE SCREEN DISPLAY INFORMATION Wc BASED ON OPERATION → S13 — UPDATE SCREEN ACCORDING TO UPDATED SCREEN DISPLAY INFORMATION Wc → END
- NO ↓

S14 — OBJECT MOVING OPERATION?
- YES → S15 — UPDATE WORKSPACE INFORMATION BASED ON POSITIONAL INFORMATION AFTER MOVEMENT → S16 — UPDATE SCREEN BASED ON UPDATED WORKSPACE INFORMATION → S17 — TRANSMIT OBJECT MOVEMENT INFORMATION TO ANOTHER TERMINAL → S18 — INSTRUCTION POINTER?
  - NO → END
  - YES → S19 — UPDATE SCREEN DISPLAY INFORMATION Wr → S20 — TRANSMIT SCREEN DISPLAY INFORMATION Wr TO ANOTHER TERMINAL → END
- NO ↓

S21 — FOCUS OPERATION?
- NO → END
- YES → S22 — CALCULATE SCREEN DISPLAY INFORMATION Wc BASED ON SCREEN DISPLAY INFORMATION Wr → S23 — UPDATE SCREEN DISPLAY INFORMATION Wc → S24 — UPDATE SCREEN ACCORDING TO UPDATED SCREEN DISPLAY INFORMATION Wc → END

END

EP 4 181 114 A1

# FIG. 9

START

IS SCREEN DISPLAY INFORMATION RECEIVED? `S101`

YES

NO

IS OBJECT MOVEMENT INFORMATION RECEIVED? `S103`

NO

YES

UPDATE WORKSPACE INFORMATION BASED ON OBJECT MOVEMENT INFORMATION `S104`

UPDATE SCREEN ACCORDING TO UPDATED WORKSPACE INFORMATION `S105`

OVERWRITE RECEIVED SCREEN DISPLAY INFORMATION TO SCREEN DISPLAY INFORMATION Wr TO PERFORM UPDATING `S102`

END

# FIG. 10

START

S11 — SCROLL OPERATION OR ZOOM OPERATION?
- YES →
- NO ↓

S14 — OBJECT MOVING OPERATION?
- YES →
- NO ↓

S15 — UPDATE WORKSPACE INFORMATION BASED ON POSITIONAL INFORMATION AFTER MOVEMENT

S16 — UPDATE SCREEN BASED ON UPDATED WORKSPACE INFORMATION

S17 — TRANSMIT OBJECT MOVEMENT INFORMATION TO ANOTHER TERMINAL

S21 — FOCUS OPERATION?
- NO →
- YES ↓

S205 — CALCULATE SCREEN DISPLAY INFORMATION Wc BASED ON WINDOW IDENTIFICATION INFORMATION

S23 — UPDATE SCREEN DISPLAY INFORMATION Wc

S24 — UPDATE SCREEN ACCORDING TO UPDATED SCREEN DISPLAY INFORMATION Wc

S201 — INSTRUCTION POINTER?
- NO →
- YES ↓

S202 — IS WINDOW OVERLAPPED?
- NO →
- YES ↓

S203 — UPDATE WINDOW IDENTIFICATION INFORMATION

S204 — TRANSMIT WINDOW IDENTIFICATION INFORMATION TO ANOTHER TERMINAL

S12 — UPDATE SCREEN DISPLAY INFORMATION Wc BASED ON OPERATION

S13 — UPDATE SCREEN ACCORDING TO UPDATED SCREEN DISPLAY INFORMATION Wc

END

# FIG. 11

```
          ┌─────────────┐
          │    START    │
          └──────┬──────┘
                 │
                 ▼           ⌐S301
            ╱IS WINDOW ╲
           ╱IDENTIFICATION╲      YES
          ◁ INFORMATION   ▷──────────────────────┐
           ╲ RECEIVED?  ╱                         │
            ╲         ╱                           │
                 │ NO                             │
                 ▼            ⌐S103               │
      NO    ╱  IS OBJECT  ╲                       │
   ┌───────◁MOVEMENT INFORMATION▷                 │
   │        ╲  RECEIVED?  ╱                        │
   │         ╲         ╱                           │
   │              │ YES                            │
   │              ▼        ⌐S104                   ▼              ⌐S302
   │    ┌──────────────────────┐        ┌──────────────────────┐
   │    │UPDATE WORKSPACE       │        │OVERWRITE RECEIVED     │
   │    │INFORMATION BASED ON   │        │WINDOW IDENTIFICATION  │
   │    │OBJECT MOVEMENT        │        │INFORMATION TO WINDOW  │
   │    │INFORMATION            │        │IDENTIFICATION         │
   │    └──────────┬───────────┘        │INFORMATION AID TO     │
   │               │        ⌐S105        │PERFORM UPDATING       │
   │    ┌──────────▼───────────┐        └──────────┬───────────┘
   │    │UPDATE SCREEN ACCORDING│                   │
   │    │TO UPDATED WORKSPACE   │                   │
   │    │INFORMATION            │                   │
   │    └──────────┬───────────┘                   │
   │               │                               │
   └───────────────┤◀──────────────────────────────┘
                   ▼
          ┌─────────────┐
          │     END     │
          └─────────────┘
```

# FIG. 12

START

S11 SCROLL OPERATION OR ZOOM OPERATION? — YES →

NO ↓

S14 OBJECT MOVING OPERATION? — YES →

NO ↓

S15 — UPDATE WORKSPACE INFORMATION BASED ON POSITIONAL INFORMATION AFTER MOVEMENT

S16 — UPDATE SCREEN BASED ON UPDATED WORKSPACE INFORMATION

S17 — TRANSMIT OBJECT MOVEMENT INFORMATION TO ANOTHER TERMINAL

NO ← S21 FOCUS OPERATION? →

NO ← S401 WINDOW? →

YES ↓

YES ↓ 22
CALCULATE SCREEN DISPLAY INFORMATION Wc BASED ON SCREEN DISPLAY INFORMATION Wr

NO ← S402 DOES MOVEMENT LOCUS HAVE SPECIFIC PATTERN? →

S12 UPDATE SCREEN DISPLAY INFORMATION Wc BASED ON OPERATION

S23 UPDATE SCREEN DISPLAY INFORMATION Wc

S403 UPDATE SCREEN DISPLAY INFORMATION Wr

S13 UPDATE SCREEN ACCORDING TO UPDATED SCREEN DISPLAY INFORMATION Wc

S24 UPDATE SCREEN ACCORDING TO UPDATED SCREEN DISPLAY INFORMATION Wc

S404 — TRANSMIT SCREEN DISPLAY INFORMATION Wr TO ANOTHER TERMINAL

END

## FIG. 13

COMPUTER 100

SPEAKER 110b

OPERATION UNIT 110a

CAMERA 110c

CPU 150

ROM 160

DISPLAY 120

RAM 180
DISPLAY CONTROL PROCESS 180a

HDD 170
DISPLAY CONTROL PROGRAM 170a

COMMUNICATION UNIT 130

140

EP 4 181 114 A1

Europäisches
Patentamt

European
Patent Office

Office européen
des brevets

# EUROPEAN SEARCH REPORT

Application Number

EP 22 19 0958

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/319778 A1 (LEWBEL HANNAH REBECCA [US] ET AL) 8 October 2020 (2020-10-08) * paragraph [0004] – paragraph [0071] * ----- | 1-7 | INV. G09G5/00 G06F3/14 H04N7/15 |
| A | US 2020/301644 A1 (CONNY SÄREVALL CRISTOFFER KARL [NO] ET AL) 24 September 2020 (2020-09-24) * paragraph [0003] – paragraph [0095] * ----- | 1-7 | |
| A | US 2016/179754 A1 (BORZA PAUL VALENTIN [US] ET AL) 23 June 2016 (2016-06-23) * the whole document * ----- | 1-7 | |
| A | WO 2010/090286 A1 (KONICA MINOLTA HOLDINGS INC [JP]; HORIE DAISAKU [JP] ET AL.) 12 August 2010 (2010-08-12) * abstract * ----- | 1-7 | |
| A | WO 2016/179401 A1 (HAWORTH INC [US]) 10 November 2016 (2016-11-10) * paragraph [0006] – paragraph [0103] * ----- | 1-7 | TECHNICAL FIELDS SEARCHED (IPC) G06F H04N H04L |

The present search report has been drawn up for all claims

| Place of search | Date of completion of the search | Examiner |
|---|---|---|
| The Hague | 30 March 2023 | Bijn, Koen |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## EP 4 181 114 A1

### ANNEX TO THE EUROPEAN SEARCH REPORT
### ON EUROPEAN PATENT APPLICATION NO.

EP 22 19 0958

This annex lists the patent family members relating to the patent documents cited in the above-mentioned European search report.
The members are as contained in the European Patent Office EDP file on
The European Patent Office is in no way liable for these particulars which are merely given for the purpose of information.

30-03-2023

| Patent document cited in search report | | | Publication date | Patent family member(s) | | | Publication date |
|---|---|---|---|---|---|---|---|
| US 2020319778 | A1 | | 08-10-2020 | EP | 3932038 | A1 | 05-01-2022 |
| | | | | US | 2020319778 | A1 | 08-10-2020 |
| | | | | WO | 2020210018 | A1 | 15-10-2020 |
| US 2020301644 | A1 | | 24-09-2020 | US | 2020301644 | A1 | 24-09-2020 |
| | | | | US | 2021182012 | A1 | 17-06-2021 |
| | | | | US | 2022405038 | A1 | 22-12-2022 |
| US 2016179754 | A1 | | 23-06-2016 | CN | 107111638 | A | 29-08-2017 |
| | | | | EP | 3234808 | A1 | 25-10-2017 |
| | | | | KR | 20170098830 | A | 30-08-2017 |
| | | | | US | 2016179754 | A1 | 23-06-2016 |
| | | | | WO | 2016100413 | A1 | 23-06-2016 |
| WO 2010090286 | A1 | | 12-08-2010 | JP | WO2010090286 | A1 | 09-08-2012 |
| | | | | WO | 2010090286 | A1 | 12-08-2010 |
| WO 2016179401 | A1 | | 10-11-2016 | CN | 107636584 | A | 26-01-2018 |
| | | | | EP | 3292524 | A1 | 14-03-2018 |
| | | | | JP | 2018524661 | A | 30-08-2018 |
| | | | | US | 2016328098 | A1 | 10-11-2016 |
| | | | | US | 2016328114 | A1 | 10-11-2016 |
| | | | | US | 2021004197 | A1 | 07-01-2021 |
| | | | | US | 2023033682 | A1 | 02-02-2023 |
| | | | | WO | 2016179401 | A1 | 10-11-2016 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019016360 A